# EUROPEAN PATENT SPECIFICATION

(11) **EP 0 414 500 B1**
(45) Date of publication and mention of the grant of the patent: **27.10.1993**
(21) Application number: 90309167.6
(22) Date of filing: 21.08.1990
(51) Int. Cl.: F16L 37/084, F16L 37/133

(54) **Moulded plastics pipe connector**
Formkupplung für Rohre aus Kunststoff
Raccord moulé pour tuyaux en matière plastique

(30) Priority: 24.08.1989 GB 8919261
(43) Date of publication of application: 27.02.1991
(73) Proprietor: Adaptaflex Limited, Coleshill Birmingham B46 1HT (GB)
(72) Inventor: Harding, Brian, Nr. Bucknell, Shropshire, SY7 0DX (GB)
(74) Representative: Russell, Paul Sidney

(56) References cited:
- EP-A- 0 031 022
- WO-A-89/01109
- DE-U- 8 706 430
- US-A- 3 250 551
- US-A- 4 248 459

## Description

This invention relates to a moulded plastics pipe connector for fitting to an end portion of a pipe and comprising a tubular body arranged to receive the pipe and at least one sprung catch arranged on the body to engage the pipe for retention of the pipe, the sprung catch comprising a finger presenting a free-end portion which is resiliently displaceable radially of the body and which bears a projection for engagement behind a circumferential ridge of the pipe to lock the pipe into the connector. For example, such a connector may be for joining to the end of flexible corrugated tubular conduit such as is commonly used as trunking for electrical wiring. A number of known connectors utilise sprung catches which comprise resilient fingers having projections to engage in a corrugation valley of the pipe to prevent withdrawal of the pipe. The fingers in these known connectors undergo resilient beam deflection during insertion and removal of the pipe, and/or a line of weakness may be utilised to facilitate the resilient bending of the material at a root portion of the finger. Examples of such known connectors are disclosed by WO-A-87/04767 and EP-A-0 046 616.

Sealing means may be incorporated in the connector to seal between the pipe and the connector.

Such known connectors used with corrugated conduit have a number of disadvantages. A common problem is that the catches are either too weak to retain the corrugated conduit in position against a high pull-off load or they are strong enough to retain the corrugated conduit but instead the fingers are too stiff to allow the conduit to be pushed easily into the connector.

With some known connectors it is difficult to displace the finger to allow removal of the conduit from the connector if it becomes necessary to disassemble the connection.

Problems can also be encountered in using known catch designs in larger connectors (e.g. having a diameter of 5cm or more) or where the conduit is of a ductile plastics having a low coefficient of friction.

A connector according to the invention is characterised in that a root portion of the finger is connected to the body by means of lateral mounting elements which provide for the finger to be resiliently pivotable about a transverse axis through elastic torsional strain in the elements.

The finger may be accommodated within an opening in the tubular body. In that way, the body may define a smooth bore to receive the pipe, interrupted only by the projection on the finger.

Ordinarily, for best effect, the finger extends from its root portion to its free end generally axially of the body. However, in some circumstances it may be found advantageous to align the finger otherwise. The root portion of the finger may be positioned at or adjacent to an open end of the tubular body through which the pipe is to be introduced, the finger extending along the body in the direction away from the open end.

The sprung catch can advantageously comprise an extension portion which extends from the root portion of the finger in the direction away from the free-end portion bearing the projection; this can enable the finger to be pivoted, to move the projection outwards, by exerting an inwardly directed force on the extension. Such provision for pivoting the finger may facilitate both assembly and disassembly of the connection, particularly with large diameter pipes.

Advantageously the connector may be provided with a plurality of such fingers distributed around the bore.

In a preferred form the connector as a whole is made as a unitary moulding of a plastics material. Alternatively the catch, comprising the finger and the mounting elements, could be made as a separate unitary moulding to be secured to a moulded body.

Nylon 6 can be a suitable plastics material for use in moulding the connector. Advantageously, with larger pivoting movements torsional stress at the mounting elements may cause the material of the elements to enter a viscous range; accordingly the finger would remain in its pivoted-out position until positively returned to its normal position. This can enable connections to be easily made or unmade. In some embodiments, particularly those with large diameter connectors, the connectors may be supplied with the fingers in a pivoted-out position.

The invention takes advantage of the relatively low transverse modulous of elasticity (G) of suitable plastics materials (as compared with their Young's modulous (E) which would determine their performance in beam deflection) in mounting the fingers by means of the torsion elements.

An embodiment of the invention will now be described, by way of example only, with reference to the accompanying drawings in which:
Figure 1 is a side view of a connector in accordance with the invention;
Figure 2 is an axial section through the connector on the line X-X of Figure 1;
Figure 3 is a scrap view of a finger of the connector; and
Figure 4 is a top plan view of the finger in the direction of the arrow Y of Figure 1.

A one-piece plastics pipe connector comprises a tubular body 1 defining a stepped bore 2. A forward end portion 3 of the body forms externally-threaded connecting means 4 to enable the connector to be coupled to another body. (In other embodiments, alternative connecting means could be substituted for particular requirements.)

Between a first pipe-receiving portion 5 of the body 1 (adjacent to the connecting means 4) and a second portion 8, the bore 2 is stepped radially outwards to form an internal annular shoulder 6. In the second portion 8 the bore extends rearwardly from the shoulder 6 to an open end 7 of the body through which an end portion of a pipe can be inserted into the body.

The connector is particularly adapated to be used with pipe in the form of flexible corrugated tubular conduit in the provision of trunking for electrical wiring. The corrugated form of such conduit provides spaced circumferentially-extending ridges all along the length of the conduit.

At least one sprung catch arrangement, comprising a resiliently displaceable finger 10, is arranged on the second portion 8 of the body. The finger is accommodated within an opening 9 in the body and extends from a root portion 11 which is joined to the body 1 by two oppositely projecting lateral mounting elements 15 at the open end of the body. The finger 10 extends within the opening 9 in a direction generally axially of the body from its root portion 11 to a free-end portion bearing a projection 12. The projection 12 projects radially inwardly of the body 1 into the bore 2 and is adapted to engage behind an adjacent ridge on a conduit (not shown) inserted into the connector. The projection 12 has a front end face 14 and a rear end face 13, the end faces 13 and 14 each being inclined forwardly. Side portions 20 of the projection 12 are convergent towards a tip 21 of the projection.

The two mounting elements 15 provide for the free-end portion of the finger to be resiliently displaceable radially of the body, the finger being resiliently pivotable about a transvrse axis 17 through elastic torsional strain in the mounting elements. A slot 16 is located in the finger forwardly of the mounting elements to receive a screwdriver or other tool; this enables the finger to be pivoted to move the projection 12 out of engagement with an inserted conduit, so to facilitate insertion and removal of the conduit if required. The slot 16 may in an alternative form be located directly between the mounting elements rather than forwardly of them.

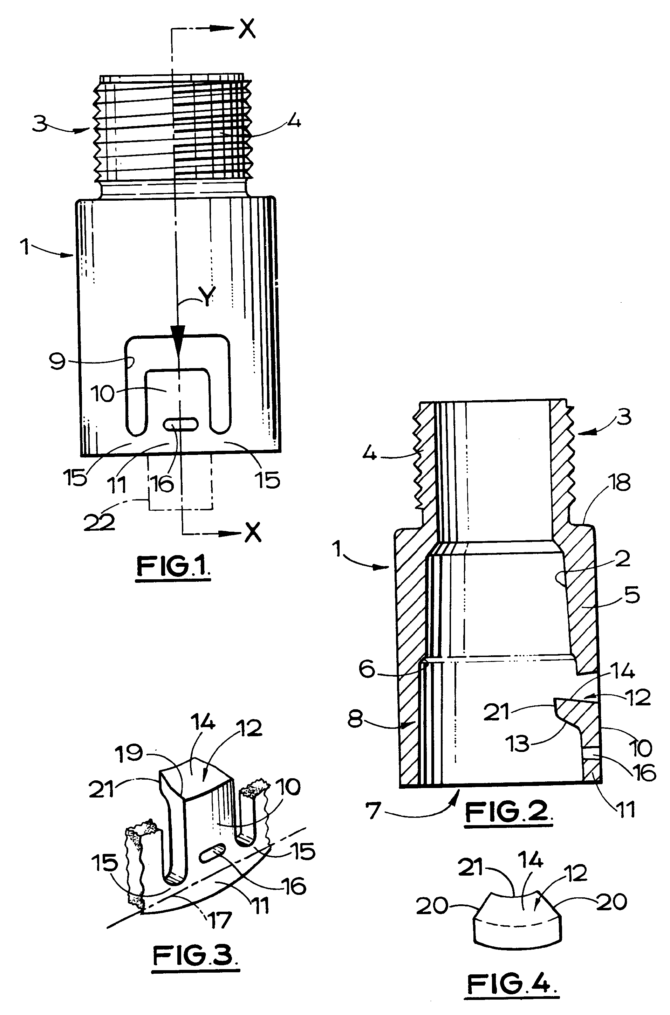

In another embodiment an extension portion 22 (Figure 1) may extend in the opposite direction from the finger 10 to enable the finger to be pivoted outwardly by inward manual depression of the extension. The extension 22 could be accommodated within the length of the body 1 but preferably extends rearwardly beyond the open end 7 of the connector as shown in Figure 1.

The connector can be provided with sealing means acting between the inside of the body 1 and the outside of an inserted conduit. To that end, the bore 2 in the first portion 5 of the body may be tapered to provide a sealing fit for the end of the conduit. Alternatively an O ring or other sealing means may be incorporated.

The connector shown is provided with one conduit-retaining finger 10. In other embodiments a plurality of such fingers may be provided, preferably uniformly distributed about the axis of the connector; for example, in a connector having a bore diameter of 5cm it may be appropriate to have four fingers provided equi-spaced at 90° intervals around the connector.

The connector is made as a unitary moulding of a suitable plastics material such as nylon 6. Alternatively, a catch-providing component comprising a supporting portion, mounting elements and a finger may be formed as a separate unitary plastics moulding to be secured in a body moulding.

In use of the connector, an end portion of a conduit is pushed in through the open end 7. The inclination of the rear face 13 of the projection 12 on the finger 10 facilitates outwards displacement of the finger as ridges on the conduit are pushed forwards past the projection. When the conduit is fully inserted, the projection 12 engages behind an adjacent ridge, the inclination of the front face 14 ensuring retention of the conduit in the connector against normal pull-off loads.

The convergent form of the side portions 20 of the projection can minimise shear stress in this area.

Limited pivoting of the finger causes only elastic torsional strain in the mounting elements, the finger so being resiliently mounted for temporary displacement of the projection 12 as ridges are pushed past during insertion of the conduit. Greater displacement of the finger can cause the plastics material of the mounting elements to behave in a viscous manner, so that when the force causing pivoting is removed the finger remains in the position to which it has been pivoted; the finger can be returned subsequently to its original position. Advantage may be taken of this viscous behaviour of the material to move the finger aside to a pivoted-out position in which it will remain whilst a conduit is inserted or removed from the connector. This behaviour can be particularly advantageous when a conduit is to be disconnected from a connector having a plurality of fingers and able to retain the connector against a high pull-off load. It may be appropriate for larger connectors, having a plurality of fingers, to be supplied with the fingers in a pivoted-out position.

## Claims

1. A moulded plastics pipe connector for fitting to an end portion of a pipe and comprising a tubular body (1) arranged to receive the pipe and at least one sprung catch arranged on the body to engage the pipe for retention of the pipe, the sprung catch comprising a finger (10) presenting a free-end portion which is resiliently displaceable radially of the body and which bears a projection (12) for engagement behind a circumferential ridge of the pipe to lock the pipe into the connector, characterised in that a root portion (11) of the finger is connected to the body by means of lateral mounting elements (15) which provide for the finger to be resiliently pivotable about a transverse axis through elastic torsional strain in the elements.

2. A pipe connector according to claim 1 in which the finger (10) is accommodated within an opening (9) in the tubular body (1).

3. A pipe connector according to either of claims 1 and 2 in which the finger (10) extends generally axially of the body from its root portion (11) to its free-end portion.

4. A pipe connector according to claim 3 in which the root portion (11) of the finger is positioned at or adjacent to an open end (7) of the tubular body through which the pipe is introduced, the finger extending along the body in the direction away from the open end.

5. A pipe connector according to any one of claims 1 to 4 in which the sprung catch comprises an extension portion (22) which extends from the root portion (11) of the finger in the direction away from the free-end portion bearing the projection (12), the extension being depressible to pivot the finger radially outwardly of the body.

6. A pipe connector according to any one of claims 1 to 5 in which the body (1), the mounting elements (15) and the finger (10) are formed as a unitary plastics moulding.

7. A pipe connector according to any one of claims 1 to 6 comprising a plurality of such sprung catches distributed around the body (1) to engage the pipe.

8. A pipe connector according to any one of claims 1 to 7 in which a larger pivoting movement of the finger can be effected which results in such torsional stress in the mounting elements as to cause the material of the elements to enter a viscous range, the finger thereafter remaining in a pivoted-out position until positively returned.

## Patentansprüche

1. Ein aus Preßstoff bestehender Rohrverbinder zum Anbringen an einem Endabschnitt eines Rohres, mit einem zum Aufnehmen des Rohres vorgesehenen rohrförmigen Körper (1) und mit mindestens einer an dem Körper vorgesehenen abgefederten Verriegelung zum Ineingriffgelangen mit dem Rohr, um das Rohr zurückzuhalten, wobei die abgefederte Verriegelung einen Finger (10) aufweist, der einen ein freies Ende bildenden Abschnitt aufweist, welcher bezüglich des Körpers radial in federnder Weise verschiebbar ist und welcher einen Vorsprung (12) zum Ineingriffkommen hinter einem über den Umfang verlaufenden Steg des Rohres trägt, um das Rohr in dem Verbinder zu verriegeln, **dadurch gekennzeichnet,** daß ein Fuß-Abschnitt (11) des Fingers mit dem Körper mit Hilfe von seitlichen Befestigungselementen (15) verbunden ist, durch welche sich für den Finger infolge elastischer Torsionsbeanspruchung in den Elementen eine federnde Verschwenkbarkeit um eine quer verlaufende Achse ergibt.

2. Rohrverbinder nach Anspruch 1, bei welchem der Finger (10) innerhalb einer Öffnung (9) in dem rohrförmigen Körper (1) eingepasst ist.

3. Rohrverbinder nach einem der Ansprüche 1 und 2, bei welchem sich der Finger (10) im allgemeinen in der Axialrichtung des Körpers von seinem Fuß-Abschnitt (11) bis zu seinem das freie Ende bildenden Abschnitt hin erstreckt.

4. Rohrverbinder nach Anspruch 3, bei welchem der Fuß-Abschnitt (11) des Fingers an einem oder benachbart zu einem offenen Ende (7) des rohrförmigen Körpers angeordnet ist, durch welches das Rohr eingeführt wird, wobei sich der Finger entlang dem Körper in der Richtung weg von dem offenen Ende erstreckt.

5. Rohrverbinder nach einem der Ansprüche 1 bis 4, bei welchem die abgefederte Verriegelung einen Verlängerungsabschnitt (22) aufweist, der sich von dem Fuß-Abschnitt (11) des Fingers aus in der Richtung weg von dem das freie Ende bildenden Abschnitt, welcher den Vorsprung (12) trägt, erstreckt, wobei die Verlängerung niederdrückbar ist, um den Finger in Radialrichtung nach außen in Bezug auf den Körper zu schwenken.

6. Rohrverbinder nach einem der Ansprüche 1 bis 5, bei welchem der Körper (1), die Befestigungselemente (15) und der Finger (10) als ein einheitliches, aus Preßmasse (Kunststoff-Formmasse) bestehendes Formteil ausgeformt sind.

7. Rohrverbinder nach einem der Ansprüche 1 bis 6, welcher eine Vielzahl von solchen abgefederten Verriegelungen aufweist, die um den Körper (1) herum zum Ineingriffgelangen mit dem Rohr verteilt angeordnet sind.

8. Rohrverbinder nach einem der Ansprüche 1 bis 7, bei welchem eine größere Schwenkbewegung des Fingers bewirkt werden kann, welche in einer solchen Torsionsbeanspruchung der Befestigungselemente resultiert, daß das Material der Elemente zum Übergang in einen viskosen Bereich veranlaßt wird, wobei die Finger anschließend in einer herausgeschwenkten Stellung verbleiben, bis sie zwangsläufig zurückgedreht werden.

## Revendications

1. Raccord en matière plastique moulé pour canalisations, destiné à être placé sur une partie d'extrémité d'une canalisation et comportant un corps tubulaire (1) agencé de manière à recevoir la canalisation, et au moins un dispositif d'accrochage à ressort disposé sur le corps de manière à engrener avec la canalisation pour la retenir, le dispositif d'accrochage à ressort comprenant un doigt (10) comportant une partie d'extrémité libre, qui peut être déplacée elastiquement radialement par rapport au corps et qui comporte une partie saillante (12) destinée à s'engager derrière un rebord circonférentiel de la canalisation pour bloquer cette dernière dans le raccord, caractérisé en ce qu'une partie de base (11) du doigt est raccordée au corps au moyen d'éléments latéraux de montage (15), qui permettent au doigt de pivoter élastiquement autour d'un axe transversal, sous l'effet d'une déformation élastique de torsion des éléments.

2. Raccord pour canalisations selon la revendication 1, dans lequel le doigt (10) est logé dans une ouverture (9) ménagée dans le corps tubulaire (1).

3. Raccord pour canalisations selon l'une quelconque des revendications 1 et 2, dans lequel le doigt (10) s'étend d'une manière générale dans la direction axiale du corps, depuis sa partie de base (1) jusqu'à sa partie d'extrémité libre.

4. Raccord pour canalisations selon la revendication 3, dans lequel la partie de base (11) du doigt est positionnée dans ou au voisinage d'une extrémité ouverte (7) du corps tubulaire, par laquelle la canalisation est introduite, le doigt s'étendant le long du corps dans une direction s'écartant de l'extrémité ouverte.

5. Raccord pour canalisations selon l'une quelconque des revendications 1 à 4, dans lequel le dispositif d'accrochage à ressort comprend un prolongement (22) qui s'étend à partir de la partie de base (11) du doigt dans une direction s'écartant de la partie d'extrémité libre portant la partie saillante (12), le prolongement pouvant être enfoncé de manière à faire pivoter le doigt radialement vers l'extérieur du corps.

6. Raccord pour canalisations selon l'une quelconque des revendications 1 à 5, dans lequel le corps (1), les éléments de montage (15) et le doigt (10) sont réalisés sous la forme d'une pièce moulée en matière plastique monobloc.

7. Raccord pour canalisations selon l'une quelconque des revendications 1 à 6, comprenant une pluralité de tels dispositifs d'accrochage à ressort répartis autour du corps (1) de manière à engrener avec la canalisation.

8. Raccord pour canalisations selon l'une quelconque des revendications 1 à 7, dans lequel un mouvement de pivotement plus étendu du doigt peut être exécuté, ce qui conduit à l'application d'une contrainte de torsion telle, dans les éléments de fixation, que le matériau de ces éléments passe dans un état visqueux, le doigt restant ensuite dans une position écartée par pivotement, jusqu'à ce qu'il soit rabattu efficacement.
